# EUROPEAN PATENT SPECIFICATION

(11) **EP 4 008 583 B1**
(45) Date of publication and mention of the grant of the patent: **14.06.2023**
(21) Application number: 21210818.7
(22) Date of filing: 26.11.2021
(51) Int. Cl.: B60N 2/28

(54) **CHILD CAR SEAT**
KINDERAUTOSITZ
SIÈGE AUTO POUR ENFANT

(30) Priority: 03.12.2020 IT 202000029648
(43) Date of publication of application: 08.06.2022
(73) Proprietor: L'Inglesina Baby S.p.A., 36077 Altavilla Vicentina (VI) (IT)
(72) Inventor: GORZA, Roberto, 32034 PEDAVENA BL (IT); SCALDAFERRO, Dario, 36030 COSTABISSARA VI (IT); TOMASI, Ivan, 36051 CREAZZO VI (IT); DAL MASO, Paolo, 36071 ARZIGNANO VI (IT)
(74) Representative: Modiano, Micaela Nadia

(56) References cited:
- CN-A- 110 497 826
- US-A1- 2020 215 941

## Description

The present invention relates to a child car seat, for transporting children.

Child seats are known, and their use has now been mandatory for some time when it is desired to transport children in cars.

Such child seats are usually constituted by a seat structure inside which the child can be accommodated; the seat structure can be anchored, using devices of various kinds, to the seats of the car so as to ensure that, during the trip, the seat (and as a consequence the child) is stably integral with the seat. CN 110 497 826 A discloses an example of a known child car seat.

However, a certain inconvenience has been found in using this type of child seat, in that the operations to couple and decouple the seat structure to/from the seat of the car are quite arduous.

To seek to overcome this drawback, child car seats have been proposed which can be associated with what is known as a "car base", which constitutes a form of interface between the seat of the car and the seat structure.

Basically, the car base is fixed directly to the seat with fixing devices associated with the seats themselves (such as, for example, the automatic coupling means known commercially as ISO-FIX) while the seat structure is coupled (or decoupled) directly to/from the car base, so that the child can be carried by hand or transported on a buggy.

It seems evident that the use of child seats associated with the car base has facilitated the coupling/decoupling operations, by making such operations intuitive and less arduous.

One particular type of car base is constituted by what are called rotatable bases, which make it possible to rotate the seat about a substantially vertical axis, in order to allow its transition from a loading/unloading position, in which the child is facing toward the side, and one or more use positions, in which the child is arranged facing the advancement direction of the vehicle or facing the opposite direction, as required by the international regulations in force.

With particular reference to rotatable child car seats, it should be noted that the ability to decouple the seat, which is integral with the fixed part of the car base, must be guaranteed both in the loading/unloading position and in the use position.

The known solutions are often rather complex from the point of view of construction.

The aim of the present invention is to provide a child car seat that is capable of improving the known art in one or more of the above mentioned aspects.

Within this aim, an object of the invention is to make available a child car seat that allows the decoupling of the seat to be executed in an extremely reliable manner.

Another object of the invention is to provide a child car seat that is highly reliable, low weight, easy to implement, and of low cost.

This aim and these and other objects which will become better apparent hereinafter are achieved by a child car seat according to claim 1, optionally provided with one or more of the characteristics of the dependent claims.

Further characteristics and advantages of the invention will become better apparent from the detailed description that follows of a preferred, but not exclusive, embodiment of the child car seat according to the invention, which is illustrated for the purposes of non-limiting example in the accompanying drawings wherein:

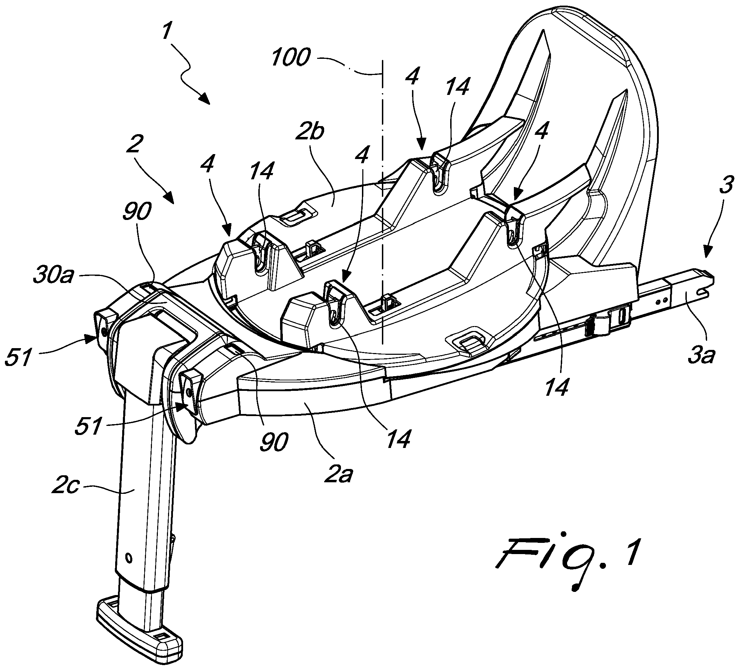

Figure 1 is a perspective view of the car base of a child car seat according to the invention in the active or use position;

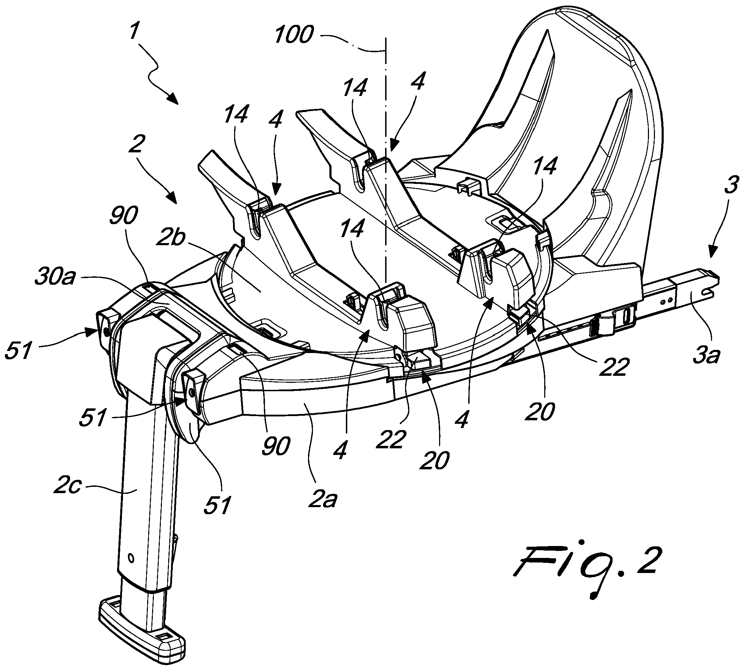

Figure 2 is a view similar to the previous one in which the car base is in the inactive or loading/unloading position;

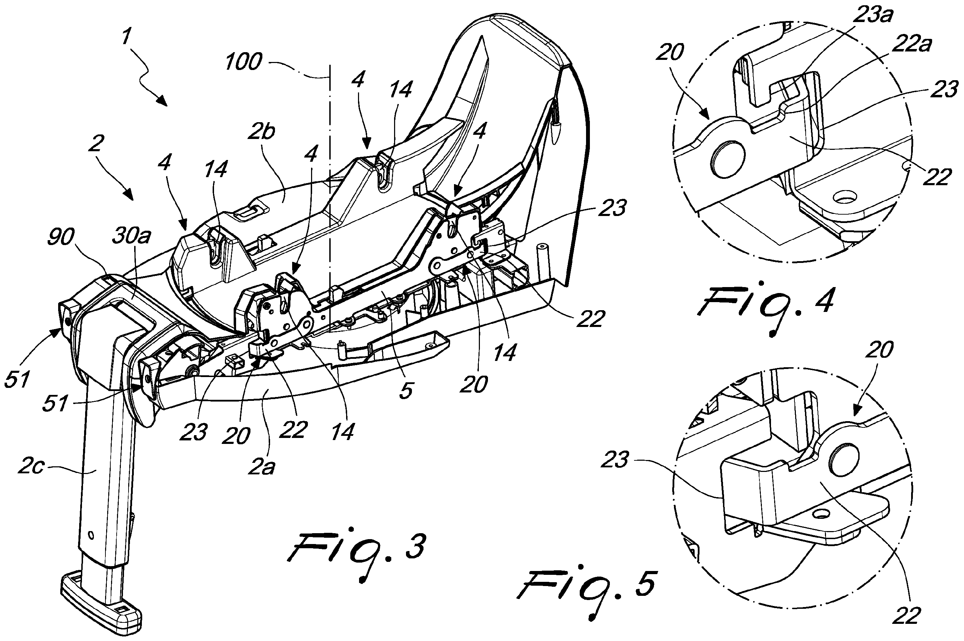

Figure 3 is a view similar to that of Figure 1 in which a part of the external shell of the car base is removed in order to allow the retention and contrast device to be seen;
Figures 4 and 5 are enlarged-scale views of some portions of the retention and contrast device shown in Figure 3;

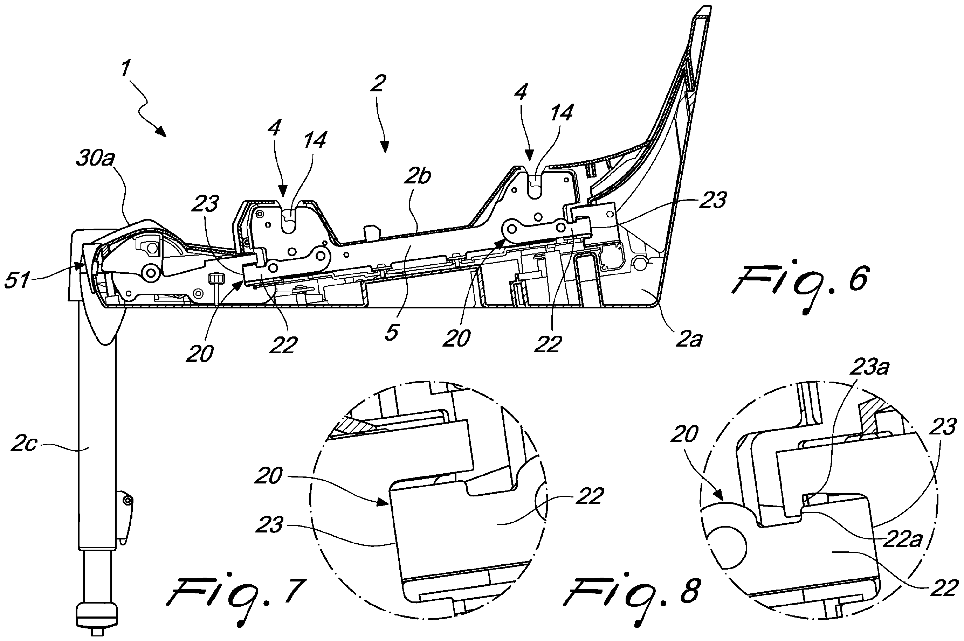

Figure 6 is a cross-sectional view of the car base in the active or use position at the retention and contrast device;
Figures 7 and 8 are enlarged-scale views of some portions of the retention and contrast device shown in Figure 6;

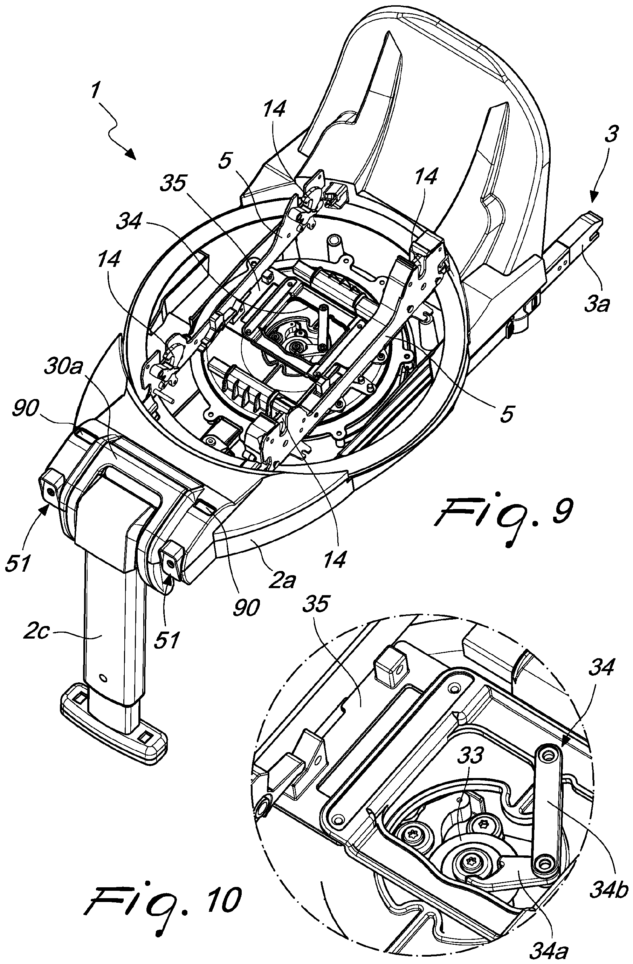

Figure 9 is a perspective view of the fixed framework and of a portion of the rotatable supporting body;
Figure 10 is an enlargement of a portion of Figure 9;

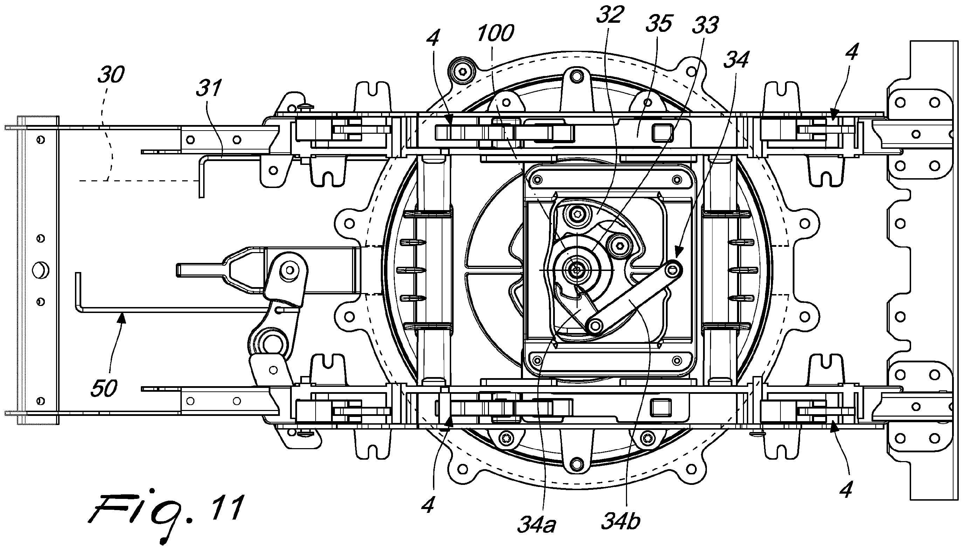

Figure 11 is a view from above of what is shown in Figure 9;

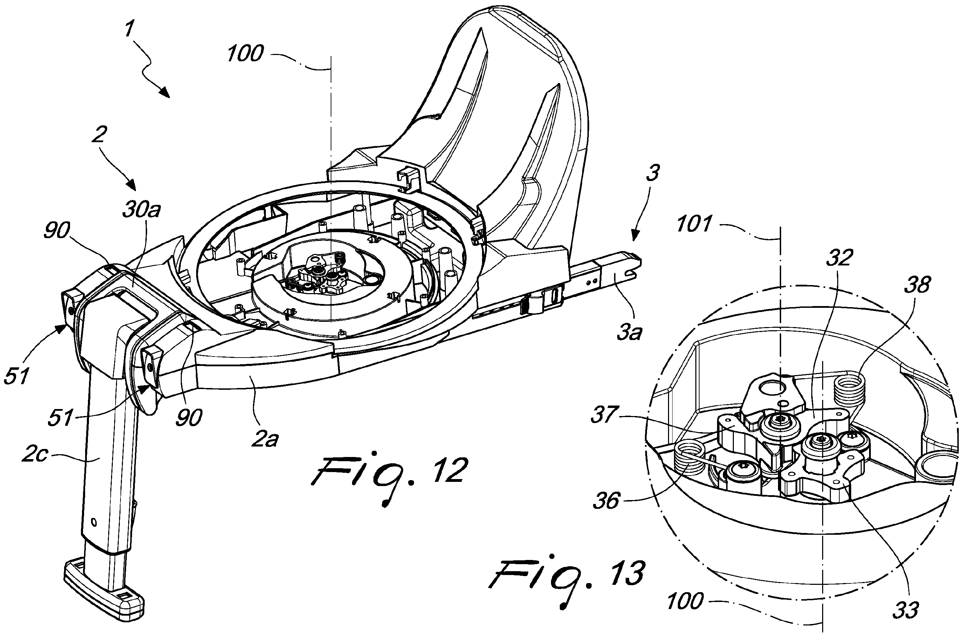

Figure 12 is a perspective view of the fixed framework;
Figure 13 is an enlargement of a portion of Figure 12;
Figures 14 to 17 are schematic views showing the sequence of operation of the kinematic connection device;

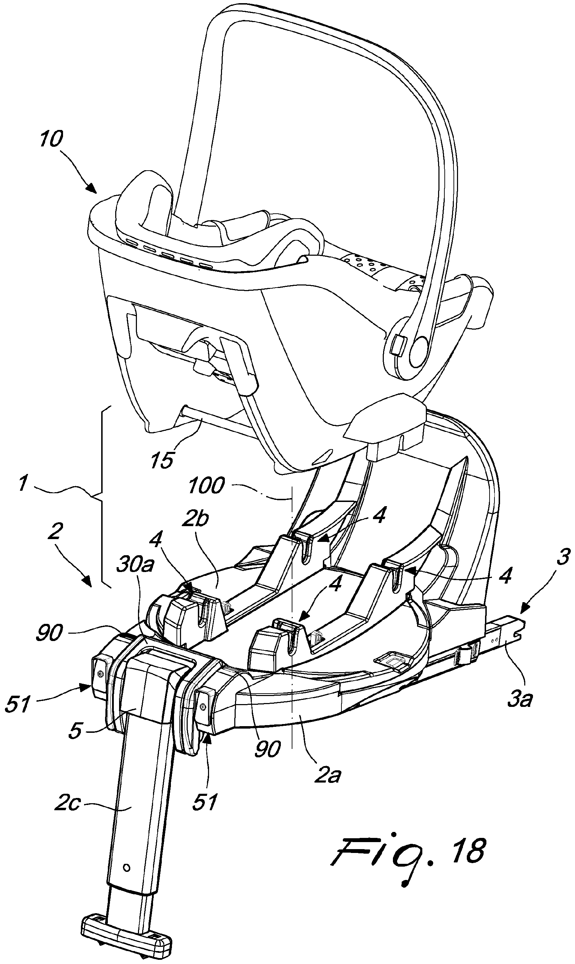

Figure 18 is a perspective view of the child car seat with a seat element during the step of coupling;

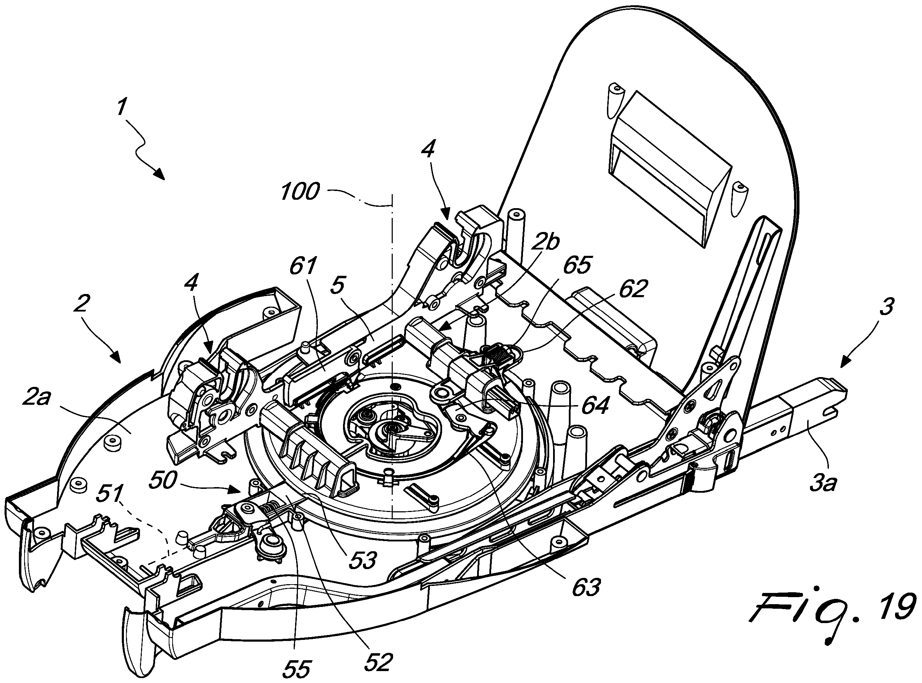

Figure 19 is a perspective view of the car base, in which a portion of the rotatable supporting body has been omitted, which is positioned in a first active position;

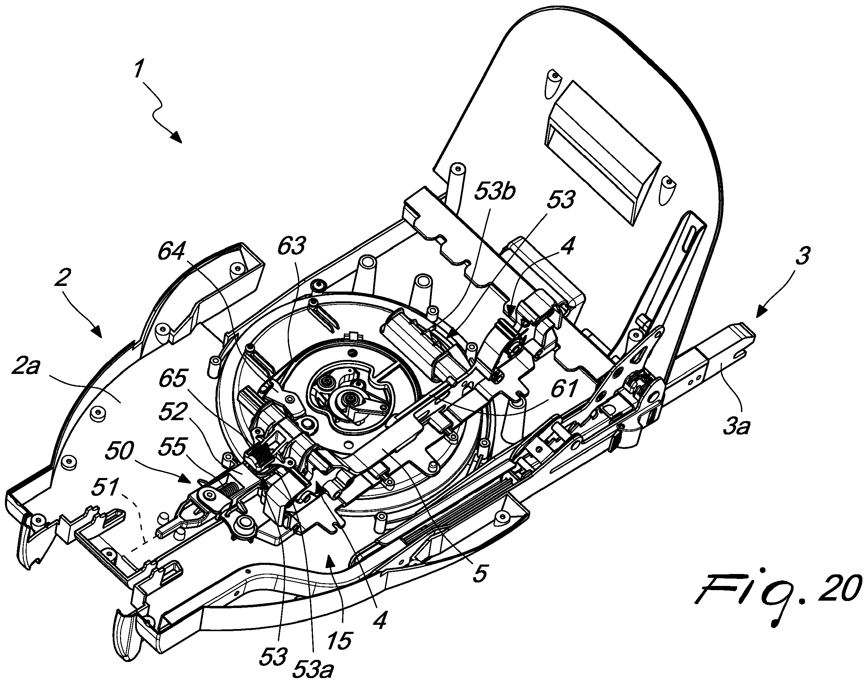

Figure 20 is a view similar to that of Figure 19 but with the rotatable supporting body in a second active position.

With reference to the figures, the child car seat according to the invention, particularly for transporting children, generally designated by the reference numeral 1, comprises a car base 2 which can be associated detachably, via fixing means 3, with a seat of a car.

With reference to the embodiment shown in the figures, the fixing means 3 comprise fixing tabs 3a which are provided with automatic coupling terminals, for example of the type commercially known as ISO-FIX.

There is no reason why different fixing means cannot be used to fix the car base 2 to the seat, such as for example means that involve the use of the car safety belt.

The child car seat 1 further comprises a seat element 10, which can be associated detachably with the car base 2 via engagement/disengagement means 4 which are known per se.

In particular, the engagement/disengagement means 4 comprise at least one hook 14 which is supported by the car base 2 and is configured to engage with a respective engagement element 15 supported by the seat element 10.

Preferably, the engagement/disengagement means 4 comprise a pair of hooks 14 which are supported by the car base 2 and are configured to engage with a respective engagement element 15 supported by the seat element 10.

Conveniently, the engagement/disengagement means 4 comprise first and second front and rear hooks 14 which are arranged on at least one longitudinal member 5.

Preferably, the engagement/disengagement means 4 are arranged on two longitudinal members 5, which are mutually parallel and are transversely spaced apart.

The car base 2 comprises a fixed framework 2a which supports, so that it can rotate about an axis 100 that is vertical during use, a rotatable supporting body 2b for the engagement/disengagement means 4.

The rotatable supporting body 2b is adapted to pass from at least one inactive or child loading/unloading position to at least one active or use position.

The at least one inactive position and the at least one active position are mutually angularly spaced apart about the axis 100.

Specifically, it is advantageous for at least two inactive positions arranged at 180° to each other are possible in order to allow the child to be loaded from both sides of the car.

It is likewise advantageous that two active positions are possible as well, angularly spaced apart by 90° from the inactive positions, in order to make it possible to arrange the seat element 10 so that the child is seated against the direction of travel of the car, or facing the direction of travel of the car.

The fixed framework 2a supports an actuation device 30a which is connected, by means of a kinematic connection device 30, to the engagement/disengagement means 4 in order to actuate the at least one pair of hooks 14 so as to disengage the respective engagement elements 15.

Conveniently, the actuation device 30a comprises a first movable handle with oscillatory movement about a tilting axis.

There is no reason why the actuation device cannot be operated using different movements or why there cannot be a different actuation system, including a remote-controlled system.

Advantageously, the seat 1 comprises at least one locking device 50 for the automatic locking of the rotatable supporting body 2b in at least one active or use position.

According to an important aspect of the invention, the fixed framework 2a supports at least one actuation element 51 which is functionally connected to the locking device 50.

The actuation element 51 comprises two lateral engagement portions, so that it can be easily moved from both sides of the car base 2.

The actuation element 51 is connected, through at least one connecting element constituted by a tension member or by a cable, to means for the relative movement of an engagement body 52, which is supported advantageously so that it can slide by the fixed framework 2a, in order to disengage it from a respective seat 53 defined on the rotatable supporting body 2b, so as to allow the mutual rotation of the rotatable supporting body 2b with respect to the fixed framework 2a about the axis 100.

Preferably, the actuation element 51 also acts in contrast against elastic contrast means, for example constituted by a spring 55.

Conveniently, the rotatable supporting body 2b defines two seats 53.

In particular, the two seats 53 comprise a first seat 53a and a second seat 53b which are angularly spaced apart 180° from each other about the axis 100.

According to a particularly important aspect of the present invention, a retention and contrast device 20 is provided for the retention and contrast of the stresses of the rotatable supporting body 2b in the at least one use position.

In particular, the retention and contrast device 20 is configured to contrast any stresses that are generated in the event of an accident.

Specifically, in the event of an accident the seat element 10 is subjected to a compound stress: a first stress force acts substantially parallel to the direction of travel of the vehicle and a second stress force tends to rip the seat element 10 from the base 2.

In particular, the retention and contrast device 20 comprises first and second engagement teeth 22 which are supported by the rotatable supporting body 2b and are adapted, when the rotatable supporting body 2b moves into the use position, to engage in a respective engagement seat 23 defined on the fixed framework 2a.

Obviously, there is no reason why the engagement teeth 22 cannot be supported by the fixed framework 2a and, as a consequence, the engagement seats 23 would be defined on the rotatable supporting body 2b.

Specifically, the engagement teeth 22 extend parallel to the direction of travel of the vehicle and are arranged on opposite sides with respect to the axis 100.

The engagement teeth 22 are integral with at least one longitudinal member 5 and are oriented away from the axis 100.

Advantageously, the retention and contrast device 20 comprises a first and a second pair of engagement teeth 22 which are integral with a respective first and second longitudinal member 5 and are oriented away from the axis 100.

The engagement seats 23 are U-shaped and are supported, mutually opposite and in pairs, directly by the fixed framework 2a, so that, when the rotatable supporting body 2b moves to one of the use conditions, the engagement teeth 22 will be accommodated in a respective engagement seat 23.

In such condition for use, any stresses, directed along the direction of travel of the car and tending to rip the seat element 10 from the car base 2, are transferred directly to the longitudinal members 5, supported by the rotatable supporting body 2b, which are retained directly by the fixed framework 2a by virtue of the coupling between the engagement teeth 22 and the respective engagement seat 23.

In this regard, there can advantageously be a shape mating between the engagement teeth 22 and the respective engagement seat 23. Such shape mating can be obtained by having the end of each engagement tooth have an upper edge 22a which is directed upward, and having the respective engagement seat 23 have a lateral retention edge 23a which is directed downward and at least partially faces, on the end directed toward the axis 100, the upper edge 22a.

According to a further aspect of the present invention, the at least one hook 14 can be associated with a first seat element and with a second seat element, different from the first seat element.

In particular, the first seat element comprises an infant seat (also known as a carry cot) and the second seat element comprises a child seat, adapted for children up to a few years old.

The first seat element is of the type adapted to be used exclusively so that the child is seated facing away from the direction of travel of the car.

The second seat element is of the type adapted to be used so that the child can be seated facing away from the direction of travel of the car or facing in the direction of travel of the car.

The engagement/disengagement means 4 are configured to enable the coupling of the second seat element to the rotatable supporting body 2b in both longitudinal orientations.

The engagement/disengagement means 4 are likewise configured to enable the coupling of the first seat element to the rotatable supporting body 2b in a single longitudinal orientation.

In this regard, it is possible for the rotatable supporting body 2b to have at least one region for interfacing with the seat element 10.

In particular, the region for interfacing is contoured so as not to interfere with the external surface of the second seat element if the latter is coupled to the at least one hook 14 in both longitudinal orientations.

The interface element is configured so as not to interfere with a respective abutment portion defined on the external surface of the first seat element if the latter is arranged so as to face the rotatable supporting body 2b in order to couple it to the at least one hook 14 in a first longitudinal orientation, while the above mentioned interface element is configured so as to interfere, and consequently prevent the coupling, with the respective abutment portion defined on the external surface of the first seat element if the latter is arranged so as to face the rotatable supporting body 2b in order to couple it to the at least one hook 14 in a second longitudinal orientation, which is opposite the first longitudinal orientation.

In this manner, while the second seat element can be associated stably with the at least one hook 14 in both longitudinal orientations, in the case of the first seat element, typically an infant seat or a carry cot, by virtue of the interface element it is possible to couple the first seat element only in a longitudinal orientation, and this independently of how the rotatable supporting body 2b is rotated.

The rotatable supporting body 2b is associated with closure means for the first seat 53a, which are actuated on command following the coupling of the first seat element with the hooks 14.

In particular, when the first seat element is associated, in the only allowed orientation of the longitudinal orientations, with the rotatable supporting body 2b, an actuation portion, defined on the first seat element, engages an abutment body 61 which is defined on the rotatable supporting body 2b and is movable with respect to the above mentioned rotatable supporting body 2b. The abutment body 61, moving for example with an oscillating motion about an oscillation axis, actuates the closure means which have a terminal portion 62 which, in such condition, prevents access, from outside, to the first seat 53a by the engagement body 52.

Arranged between the terminal portion 62 and the abutment body 61 are kinematic connection elements such as, for example, a cable 63 and an interconnecting lever mechanism 64, which is adapted to actuate the displacement of the terminal portion 62.

The terminal portion is also associated with loading means, comprising for example a spring 65, which are configured to maintain the terminal portion 62 in a condition of disengagement from the first seat 53a.

In this manner, when the rotatable supporting body 2b is associated with the first seat element it will be able to move freely about the axis 100, but the engagement body 52 will be able to engage exclusively in the second seat 53b, which is defined so that, in the single condition for use, the first seat element can be positioned so that the child is seated facing away from the direction of travel of the car.

The car base 2 is further provided with a display device 90 for showing the correct positioning of the seat element in the active position.

Such display device is configured to highlight the correct positioning when the engagement body 52 is correctly inserted into the engagement seat 53.

Obviously, only the correct engagement of the engagement body 52 in the engagement seat 53 makes it possible to highlight the correct positioning and, as a consequence, when coupling with the first seat element, the display device makes it possible to ascertain the correct positioning only when the first seat element is arranged so that the child is seated, always, facing away from the direction of travel of the car, all in order to prevent errors by the parent/user.

Conveniently, the kinematic connection device 30 comprises an elongated element 31 which is connected, at one end, to the actuation device 30a and, at the opposite end, to a pusher 32.

For the purposes of example, the elongated element 31 comprises a tension member; however, there is no reason not to use different solutions, such as for example a sheathed cable.

The pusher 32 has an engagement portion 32a, which can move, as a consequence of the movement of the actuation device 30a, to engage a rotor element 33 which is supported so that it can rotate, about the axis 100, by the fixed framework 2a.

The rotor element 33 is further connected, by means of a connecting member 34, to an actuation body 35 which is supported so that it can slide by the rotatable supporting body 2b in order to actuate the at least one pair of hooks 14.

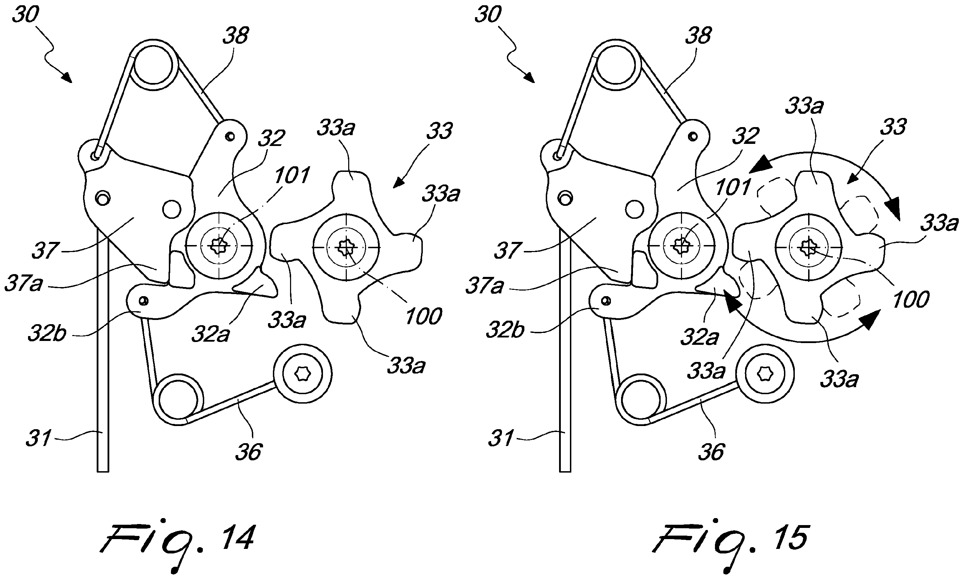

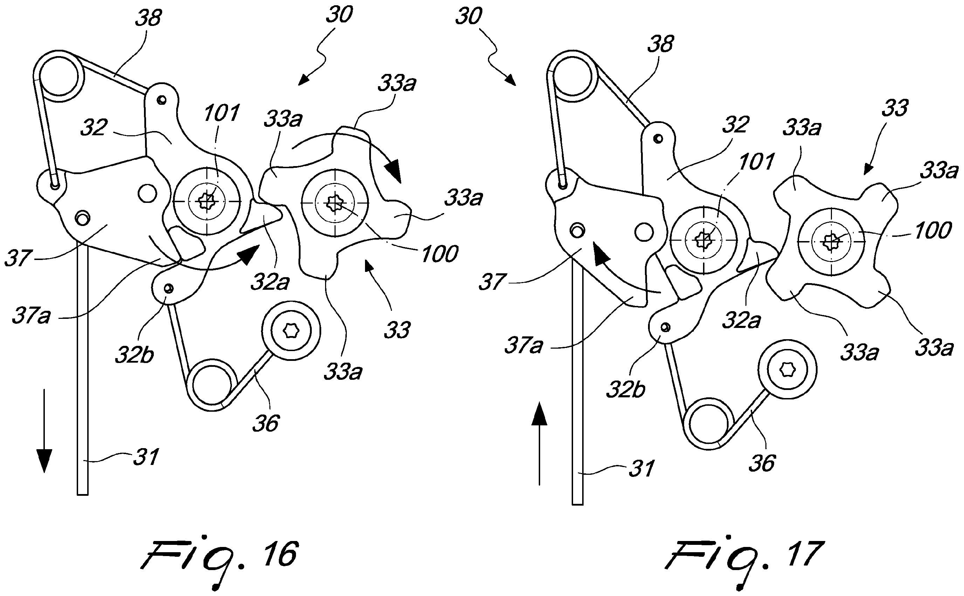

The rotor element 33, which is integral in rotation with the rotatable supporting body 2b, has a plurality of actuation tabs 33a, which are arranged angularly spaced apart from each other in a manner corresponding to the angular spacing between the various active and inactive positions of the rotatable supporting body 2b, so as to be able to be engaged directly by the pusher 32 independently of the angular position of the rotatable supporting body 2b as clearly shown in the operating arrangement illustrated for the purposes of example in Figures 14 to 17.

With reference to the practical embodiment shown in the figures, since the rotatable supporting body 2b has two inactive positions and two active positions, the actuation tabs 33a are mutually angularly spaced apart by 90° from each other.

Conveniently, there are first means of elastic contrast 36, which are configured to contrast the movement of the actuation device 30a.

This makes it possible, once the actuation device 30a is released, to return the pusher to an inactive position as well, so as to allow, following a new pressing of the actuation device 30a, the engagement with the rotor element 33.

Preferably, the first means of elastic contrast 36 comprise a spring that acts between the pusher 32 and the fixed framework 2a.

More specifically, the first means of elastic contrast 36 comprise a first double-arm torsion spring (also known as a trap-pull spring) which is normally splayed or open.

The pusher 32 is supported so that it can rotate by the fixed framework 2a about an oscillation axis 101 that is substantially parallel to the axis 100.

According to a preferred embodiment, a compensation device 37 is interposed between the pusher 32 and the elongated element 31.

This compensation device 37 is supported by the pusher 32 so that it can rotate, and it has an engagement tab, which can be oscillated following the pressing of the actuation device 30a to command the oscillation of the pusher 37 about its own oscillation axis 101.

The first means of elastic contrast 36 comprise, for example, a trap-pull spring with splayed arms, which can be connected, at an end of a first arm, to the fixed framework 2a, and at the end of the second arm, to a tab 32b of the pusher 32.

This pusher tab 32b is kept resting, by the first means of elastic contrast 36, against an abutment portion 37a defined on the pusher 37.

Elastic means for positioning and for compensating 38 are likewise provided, which act between the pusher 32 and the compensation device 37.

The presence of the compensation device 37 makes it possible, if the user should rotate the rotatable supporting body base 2b with the actuation device 30a pressed, not to stress the components that make up the kinematic connection device 30.

Delving deeper into the details, the connecting member 34 is configured to convert the rotary movement of the rotor 33 following the actuation of the actuation device 30a to a translation movement of the actuation body 35 which is supported so that it can slide by the rotatable supporting body 2b in order to actuate the release of the at least one pair of hooks 14.

According to a possible embodiment, the connecting member 34 comprises a first elongated body 34a which rotates integrally with the rotor 33 and a link rod 34b which is pivoted at the respective ends to the first elongated body 34a and to the actuation body 35.

Preferably, the actuation body 35 is mounted so that it can slide on a track defined by the rotatable supporting body 2b, so that the rotation on command of the rotor element 33 corresponds to a movement of the actuation body 35 along the respective track.

According to a possible further embodiment, the engagement/disengagement means 14 comprise a safety device adapted to prevent the accidental disengagement of the at least one hook 4 and a device for moving each hook 4.

In particular, the movement of the actuation element 35 is adapted to determine, in a first segment of movement, the deactivation of the safety device, and in a second segment of movement, the movement of the hook 14.

The operation of the child car seat 1, according to the invention, is the following.

The car base 2 is fixed to the seats of the car using the fixing means 3.

The rotatable supporting body 2b is rotated to the inactive position, so that the seat element 10 is directed to the side, toward the open door of the car, so as to facilitate the loading and unloading of the child.

When the seat element 10 is stably associated with the rotatable supporting body 2b, the hooks 14 lock onto the engagement elements 15 which are integral with the seat element 10, in order to ensure the fixing of the seat element to the car base.

If the user wishes to bring the rotatable supporting body 2b (and accordingly the seat element 10) into the active or use position, then the user proceeds to rotate the rotatable supporting body 2b about the axis 100, typically by approximately 90°.

Once this position is reached, the automatic locking device 20 blocks the rotation about the axis 100.

In such condition, in order to bring the rotatable supporting body 2b once again to the inactive or loading/unloading position, the user needs to intervene on the actuation element 51 for mutual disengagement.

If instead the user wishes to uncouple the seat element 10 from the car base 2, he or she proceeds by pressing the actuation device 30a, which is directly supported by the fixed framework 2 and is therefore always easily accessible by the user.

Pressing the actuation device 30a determines the oscillation, about the oscillation axis 101, of the pusher 32, which, with its engagement portion 32a, makes the rotor element 33 rotate about the axis 100.

The rotation, even though for a limited angular portion, of the rotor element 33 determines, by virtue of the action of the connecting member 34, the movement of the actuation body 35, supported so that it can slide by the rotatable supporting body 2b, with consequent release of the hooks 14.

It seems evident that the configuration of the kinematic mechanism described makes it possible to release the hooks in all the angular positions (both active and inactive and even intermediate between the active and inactive positions) of the rotatable supporting body 2b.

In practice it has been found that the invention fully achieves the intended aim and objects by providing a child car seat that is extremely reliable both for the locking in the various different angular positions of the rotatable supporting body 2b, and, especially, in the operations to release the hooks 14.

Furthermore, the particular shape of the rotatable supporting body 2b makes it possible to associate the first seat element (typically a carry cot) in a single longitudinal orientation, allowing it to freely rotate about the axis 100 but allowing it to be locked only in the active position in which the seat element is arranged so that the child is seated facing away from the direction of travel of the car.

Furthermore, by virtue of the presence of the retention and contrast device 20, any force to which the seat element 10 is subjected during an accident is transferred directly to the longitudinal members 5, supported by the rotatable supporting body 2b, which are retained directly by the fixed framework 2a by virtue of the coupling between the engagement teeth 22 and the respective engagement seat 23.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

This invention claims priority of the Italian Patent Application No. 102020000029648.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A child car seat (1), particularly for transporting children, which comprises a car base (2) which can be associated detachably, via fixing means (3), with a seat of a car, and a seat element (10), which can be associated detachably with said car base (2) via engagement/disengagement means (4) supported by said car base (2) which comprise at least one hook (14) configured to engage a respective engagement element (15) supported by said seat element (10), said car base (2) comprising a fixed framework (2a) which supports, so that it can rotate about an axis (100) that is vertical during use, a rotatable supporting body (2b) for said at least one hook (14) which is adapted to pass from at least one inactive or child loading/unloading position to at least two active or use positions, said at least one inactive position and said at least two active positions being mutually angularly spaced apart around said axis (100), said child car seat (1) comprising at least one locking device (50) for the automatic locking of said rotatable supporting body (2b) in at least one of said active or use positions, said fixed framework (2a) supporting at least one actuation element (51), which is functionally connected to said locking device (50) and is connected to an engagement body (52) in order to disengage it from a respective seat (53) defined on said rotatable supporting body (2b), so as to allow the mutual rotation of said rotatable supporting body (2b) with respect to said fixed framework (2a) about said axis (100), said two seats (53) comprising a first seat (53a) and a second seat (53b) which are angularly mutually spaced apart around said axis (100), said at least one hook (14) can be associated with a first seat element and with a second seat element, different from the first seat element, said first seat element being of the type adapted to be used exclusively so that the child sits against the direction of travel of the car and said second seat element being of the type adapted to be used so that the child can sit against the direction of travel of the car or facing the direction of travel of the car, **characterized in that** said engagement/disengagement means (4) are configured to allow the coupling of said second seat element to said rotatable supporting body (2b) in both longitudinal directions and of said first seat element to said rotatable supporting body (2b) in only one longitudinal orientation, said rotatable supporting body (2b) being associated with closure means for said first seat (53a), said closure means being actuated on command following the coupling of said first seat element with said at least one hook (14).

2. The child car seat (1) according to claim 1, **characterized in that** said at least one hook (14) is defined on at least one longitudinal member (5) which is supported by said car base (2) and is configured to engage a respective engagement element (15) supported by said seat element (10), a retention and contrast device (20) for the retention and contrast of the stresses of the rotatable supporting body (2b) in the at least one use position being provided and being configured to contrast any stresses, said retention and contrast device (20) comprising at least one first engagement tooth and at least one second engagement tooth (22) which are supported by the rotatable supporting body (2b) and are adapted, when said rotatable supporting body (2b) moves into the use position, to engage a respective engagement seat (23) defined on said fixed framework (2a), said at least two engagement teeth (22) being integral with at least one respective longitudinal member (5) and being oriented away from the axis (100).

3. The child car seat (1) according to claim 1 or 2, **characterized in that** said fixed framework (2a) supports an actuation device (30a) which is connected, by means of a kinematic connection device (30), to said engagement/disengagement means (4) in order to actuate said at least one hook (14) so as to disengage the respective engagement element (15), said kinematic connection device (30) comprising an elongated element (31) which is connected, at one end, to said actuation device (30a) and, at the opposite end, to a pusher (32) which has an engagement portion (32a) which can move, as a consequence of the movement of said actuation device (30a), to engage a rotor element (33) which is supported so that it can rotate, about said axis (100), by said fixed framework (2a), said rotor element (33) being connected, by means of a connecting member (34), to an actuation body (35) which is supported so that it can slide by said rotatable supporting body (2b) in order to actuate said at least one hook (14).

4. The child car seat (1) according to claim 2, **characterized in that** said engagement seats (23) are U-shaped and are supported, mutually opposite and in pairs, directly by said fixed framework (2a).

5. The child car seat (1) according to one or more of the preceding claims, **characterized in that** said actuation element (51) acts in contrast with elastic contrast means.

6. The child car seat (1) according to claims 2 or 4, **characterized in that** it comprises a shape mating between said engagement teeth (22) and the respective engagement seat (23).

7. The child car seat (1) according to claim 6, **characterized in that** said shape mating entails that the end of each engagement tooth (22) has an upper edge (22a) which is directed upward, and that the respective engagement seat (23) has a lateral retention edge (23a) which is directed downward and at least partially faces, on the end directed toward the axis (100), the respective upper edge (22a).

8. The child car seat (1) according to one or more of the preceding claims, **characterized in that** said first seat element comprises an infant seat and said second seat element comprises a child seat.

9. The child car seat (1) according to one or more of the preceding claims, **characterized in that** said rotatable supporting body (2b) comprises at least one region for interfacing with said seat element (10), said region for interfacing being shaped so as not to interfere with the external surface of said second seat element if the latter is coupled to said at least one hook (14) in both longitudinal orientations and being configured so as not to interfere with a respective abutment portion defined on the external surface of said first seat element if the latter is arranged so as to face said rotatable supporting body (2b) in order to couple it to said at least one hook (14) in a first longitudinal orientation, said interface element being configured so as to interfere with the respective abutment portion defined on the external surface of said first seat element if the latter is arranged so as to face said rotatable supporting body (2b) in order to couple it to said at least one hook (14) in a second longitudinal orientation, which is opposite the first longitudinal orientation.

10. The child car seat (1) according to one or more of the preceding claims, **characterized in that** said closure means are actuated on command following the coupling of said first seat element with said at least one hook (14) in the only allowed orientation of the longitudinal orientations, by means of an actuation portion which is defined on said first seat element, and which engages an abutment body which is defined on the rotatable supporting body (2b) and is movable with respect to said rotatable supporting body (2b), said closure means having a terminal portion adapted to prevent access to said first seat (53a) by said engagement body (52).

## Patentansprüche

1. Ein Kinderautositz (1), insbesondere für den Transport von Kindern, der eine Autobasis (2) umfasst, welche über Befestigungsmittel (3) lösbar mit eine Autositz verbunden werden kann, und ein Sitzelement (10), welches abnehmbar über von der Autobasis (2) getragene Eingriffs-/Nicht-Eingriffsmittel (4) mit der Autobasis (2) verbunden werden kann, die mindestens einen Haken (14) umfassen, der ausgebildet ist, um in ein entsprechendes Eingriffselement (15) einzugreifen, das von dem Sitzelement (10) getragen ist; wobei die Autobasis (2) einen festen Rahmen (2a) umfasst, welcher drehbar um eine Achse (100), die im Gebrauch vertikal ist, einen drehbaren tragenden Körper (2b) für den mindestens einen Haken (14) trägt, der ausgebildet ist, um aus mindestens einer inaktiven Position oder Position zum Hineinsetzen/Herausnehmen des Kindes in mindestens zwei aktive oder Nutzungspositionen zu wechseln; wobei die mindestens eine inaktive Position und die mindestens zwei aktiven Positionen winklig voneinander um die Achse (100) beabstandet sind; wobei der Kinderautositz (1) mindestens eine Arretiervorrichtung (50) zum automatischen Arretieren des drehbaren tragenden Körpers (2b) in mindestens einer der aktiven oder Nutzungspositionen zu arretieren; wobei der feste Rahmen (2a) mindestens ein Betätigungselement (51) trägt, das funktionell mit der Arretiervorrichtung (50) verbunden ist und das mit einem Eingriffskörper (52) verbunden ist, um es von einem dazugehörigen Sitz (53) zu trennen, der an dem drehbaren tragenden Körper (2b) bestimmt ist, um die Drehung des drehbaren tragenden Körpers (2b) mit Bezug auf den festen Rahmen (2a) um die Achse (100) zu ermöglichen; wobei die beiden Sitze (53) einen ersten Sitz (53a) und einen zweiten Sitz (53b) umfassen, welche voneinander winklig um die Achse (100) beabstandet sind; der mindestens eine Haken (14) kann mit einem ersten Sitzelement und mit einem zweiten Sitzelement verbunden sein, das sich vom ersten Sitzelement unterscheidet, wobei das erste Sitzelement von der Art ist, die ausgebildet ist, um ausschließlich so verwendet zu werden, dass das Kind gegen die Fahrtrichtung des Autos sitzt, und das zweite Sitzelement von der Art ist, die ausgebildet ist, um so verwendet zu werden, dass das Kind gegen die Fahrtrichtung des Autos oder in Fahrtrichtung des Autos sitzen kann; **dadurch gekennzeichnet, dass** die Eingriffs-/Nicht-Eingriffsmittel (4) ausgebildet sind, um die Kopplung des zweiten Sitzelements mit dem drehbaren tragenden Körper (2b) in beide Längsrichtungen und des ersten Sitzelements mit dem drehbaren tragenden Körper (2b) in nur eine Längsausrichtung zu ermöglichen; wobei der drehbare tragende Körper (2b) mit Verschlussmitteln für den ersten Sitz (53a) verbunden ist, wobei die Verschlussmittel auf Befehl nach Kopplung des ersten Sitzelements mit dem mindestens einen Haken (14) betätigt werden.

2. Der Kinderautositz (1) gemäß Anspruch 1, **dadurch gekennzeichnet, dass** der mindestens eine Haken (14) an mindestens einem Längsglied (5) bestimmt ist, welches von der Autobasis (2) getragen und ausgebildet ist, um mit einem dazugehörigen Eingriffselement (15) in Eingriff zu stehen, das von dem Sitzelement (10) getragen ist; wobei eine Halte- und Kontrastvorrichtung (20) zum Halten und zum Entgegenwirken gegenüber Belastungen des drehbaren tragenden Körpers (2b) in der mindestens einen Nutzungsposition bereitgestellt und ausgebildet ist, um beliebigen Belastungen entgegenzuwirken; wobei die Halte- und Kontrastvorrichtung (20) mindestens einen ersten Eingriffszahn und mindestens einen zweiten Eingriffszahn (22) umfasst, die von dem drehbaren tragenden Körper (2b) getragen und ausgebildet sind, um, wenn der drehbare tragende Körper (2b) sich in die Nutzungsposition bewegt, in einen entsprechenden Eingriffssitz (23) einzugreifen, der an dem festen Rahmen (2a) bestimmt ist; wobei die mindestens zwei Eingriffszähne (22) integral mit mindestens einem entsprechenden Längsglied (5) und fort von der Achse (11) ausgerichtet sind.

3. Der Kinderautositz (1) gemäß Anspruch 1 oder 2, **dadurch gekennzeichnet, dass** der feste Rahmen (2a) eine Betätigungsvorrichtung (30a) trägt, welche über eine kinematische Verbindungsvorrichtung (30) mit den Eingriffs-/Nicht-Eingriffsmitteln (4) verbunden ist, um den mindestens einen Haken (14) in Nicht-Eingriff mit dem entsprechenden Eingriffselement (15) zu bewegen; wobei die kinematische Verbindungsvorrichtung (30) ein lang gestrecktes Element (31) umfasst, das an einem Ende mit der Betätigungsvorrichtung (30a) und am gegenüberliegenden Ende mit einem Schieber (32) verbunden ist, der einen Eingriffsabschnitt (32a) hat, welcher sich infolge der Bewegung der Betätigungsvorrichtung (30a) bewegen kann, um in ein Rotorelement (33) einzugreifen, das drehbar um die Achse (100) auf dem festen Rahmen (2a) gelagert ist, wobei das Rotorelement (33) über ein Verbindungsglied (34) mit einem Betätigungskörper (35) verbunden ist, welcher gleitend von dem drehbaren tragenden Körper (2b) getragen ist, um den mindestens einen Haken (14) zu betätigen.

4. Der Kinderautositz (1) gemäß Anspruch 2, **dadurch gekennzeichnet, dass** die Eingriffssitze (23) U-förmig und einander gegenüberliegend und in Paaren direkt auf dem festen Rahmen (2a) gelagert sind.

5. Der Kinderautositz (1) gemäß einem oder mehreren der obigen Ansprüche, **dadurch gekennzeichnet, dass** das Betätigungselement (51) elastischen Kontrastmitteln entgegenwirkt.

6. Der Kinderautositz (1) gemäß Anspruch 2 oder 4, **dadurch gekennzeichnet, dass** er einen Formschluss zwischen den Eingriffszähnen (22) und dem entsprechenden Eingriffssitz (23) umfasst.

7. Der Kinderautositz (1) gemäß Anspruch 6, **dadurch gekennzeichnet, dass** der Formschluss beinhaltet, dass das Ende jedes Eingriffszahns (22) eine Oberkante (22a) hat, die nach oben gerichtet ist, und dadurch, dass der entsprechende Eingriffssitz (23) eine seitliche Haltekante (23a) hat, die nach unten gerichtet ist und an dem der Achse (100) zugewandten Ende der entsprechenden Oberkante (22a) zumindest teilweise zugewandt ist.

8. Der Kinderautositz (1) gemäß einem oder mehreren der obigen Ansprüche, **dadurch gekennzeichnet, dass** das erste Sitzelement einen Kleinkindersitz und das zweite Sitzelement einen Kindersitz umfasst.

9. Der Kinderautositz (1) gemäß einem oder mehreren der obigen Ansprüche, **dadurch gekennzeichnet, dass** der drehbare tragende Körper (2b) mindestens einen Bereich zur Verbindung mit dem Sitzelement (10) umfasst, wobei der Bereich zur Verbindung geformt ist, um die äußere Oberfläche des zweiten Sitzelements nicht zu behindern, wenn Letzteres in beide Längsausrichtungen mit dem mindestens einen Haken (14) gekoppelt ist, und ausgebildet, um einen entsprechenden Widerlagerabschnitt nicht zu behindern, der an der äußeren Oberfläche des ersten Sitzelements bestimmt ist, wenn Letzteres angeordnet ist, um dem drehbaren tragenden Körper (2b) zugewandt zu sein, um ihn in einer ersten Längsausrichtung mit dem mindestens einen Haken (14) zu koppeln; wobei das Verbindungselement ausgebildet ist, um den entsprechenden Widerlagerabschnitt zu behindern, der an der äußeren Oberfläche des ersten Sitzelements bestimmt ist, wenn Letzteres angeordnet ist, um dem drehbaren tragenden Körper (2b) zugewandt zu sein, um ihn in einer zweiten Längsausrichtung, die der ersten Längsausrichtung entgegengesetzt ist, mit dem mindestens einen Haken (14) zu koppeln.

10. Der Kinderautositz (1) gemäß einem oder mehreren der obigen Ansprüche, **dadurch gekennzeichnet, dass** die Verschlussmittel nach Kopplung des ersten Sitzelements mit dem mindestens einen Haken (14) in der einzigen möglichen Ausrichtung der Längsausrichtungen auf Befehl mit Hilfe eines Betätigungsabschnitts betätigt werden, der an dem ersten Sitzelement bestimmt ist und mit einem Widerlagerkörper in Eingriff steht, der an dem drehbaren tragenden Körper (2b) bestimmt und im Verhältnis zu dem drehbaren tragenden Körper (2b) beweglich ist, wobei die Verschlussmittel einen Endabschnitt haben, der ausgebildet ist, um Zugang des Eingriffskörpers (52) zu dem ersten Sitz (53a) zu verhindern.

## Revendications

1. Siège-auto pour enfant (1), en particulier pour transporter des enfants, qui comporte une base de voiture (2) qui peut être associée de manière détachable, via des moyens de fixation (3), à un siège d'une voiture, et un élément de siège (10), qui peut être associé de manière détachable à ladite base de voiture (2) via des moyens de prise/libération (4) supportés par ladite base de voiture (2) qui comportent au moins un crochet (14) configuré pour venir en prise avec un élément de prise (15) respectif supporté par ledit élément de siège (10), ladite base de voiture (2) comportant un châssis fixe (2a) qui supporte, de sorte qu'il peut tourner autour d'un axe (100) qui est vertical pendant l'utilisation, un corps de support rotatif (2b) pour ledit au moins un crochet (14) qui est adapté pour passer d'une position au moins inactive ou de chargement/déchargement d'enfant à au moins deux positions actives ou d'utilisation, ladite au moins une position inactive et lesdites au moins deux positions actives étant mutuellement espacées angulairement autour dudit axe (100), ledit siège-auto pour enfant (1) comportant au moins un dispositif de blocage (50) pour le blocage automatique dudit corps de support rotatif (2b) dans au moins une desdites positions actives ou d'utilisation, ledit châssis fixe (2a) supportant au moins un élément d'actionnement (51), qui est fonctionnellement relié audit dispositif de blocage (50) et est relié à un corps de prise (52) afin de le libérer d'un logement (53) respectif défini sur ledit corps de support rotatif (2b), de manière à permettre la rotation mutuelle dudit corps de support rotatif (2b) par rapport audit châssis fixe (2a) autour dudit axe (100), lesdits deux logements (53) comportant un premier logement (53a) et un second logement (53b) qui sont mutuellement espacés angulairement autour dudit axe (100), ledit au moins un crochet (14) peut être associé à un premier élément de siège et à un second élément de siège, différent du premier élément de siège, ledit premier élément de siège étant du type adapté pour être utilisé exclusivement de sorte que l'enfant s'assoit à l'encontre de la direction de déplacement de la voiture et ledit second élément de siège étant du type adapté pour être utilisé de sorte que l'enfant peut s'asseoir à l'encontre de la direction de déplacement de la voiture ou face à la direction de déplacement de la voiture, **caractérisé en ce que** lesdits moyens de prise/libération (4) sont configurés pour permettre le couplage dudit second élément de siège audit corps de support rotatif (2b) dans les deux directions longitudinales et dudit premier élément de siège audit corps de support rotatif (2b) dans une seule orientation longitudinale, ledit corps de support rotatif (2b) étant associé à des moyens de fermeture dudit premier logement (53a), lesdits moyens de fermeture étant actionnés sur commande après le couplage dudit premier élément de siège audit au moins un crochet (14).

2. Siège-auto pour enfant (1) selon la revendication (1), **caractérisé en ce que** ledit au moins un crochet (14) est défini sur au moins un élément longitudinal (5) qui est supporté par ladite base de voiture (2) et est configuré pour venir en prise avec un élément de prise (15) respectif supporté par ledit élément de siège (10), un dispositif de retenue et d'opposition (20) pour la retenue et l'opposition aux contraintes du corps de support rotatif (2b) dans la au moins une position d'utilisation étant prévu et étant configuré pour s'opposer à toute contrainte, ledit dispositif de retenue et d'opposition (20) comportant au moins une première dent de prise et au moins une seconde dent de prise (22) qui sont supportées par le corps de support rotatif (2b) et sont adaptées, lorsque ledit corps de support rotatif (2b) se déplace dans la position d'utilisation, pour venir en prise avec un logement de prise (23) respectif défini sur ledit châssis fixe (2a), lesdites au moins deux dents de prise (22) étant solidaires d'au moins un élément longitudinal (5) respectif et étant orientées en s'éloignant de l'axe (100)

3. Siège-auto pour enfant (1) selon la revendication 1 ou 2, **caractérisé en ce que** ledit châssis fixe (2a) supporte un dispositif d'actionnement (30a) qui est relié, au moyen d'un dispositif de liaison cinématique (30), auxdits moyens de prise/libération (4) afin d'actionner ledit au moins un crochet (14) de manière à libérer l'élément de prise (15) respectif, ledit dispositif de liaison cinématique (30) comportant un élément allongé (31) qui est relié, à une extrémité, audit dispositif d'actionnement (30a) et, à l'extrémité opposée, à un poussoir (32) qui a une partie de prise (32a) qui peut se déplacer, en conséquence du mouvement dudit dispositif d'actionnement (30a), pour venir en prise avec un élément de rotor (33) qui est supporté de sorte qu'il peut être mise en rotation, autour dudit axe (100), par ledit châssis fixe (2a),ledit élément de rotor (33) étant relié, au moyen d'un élément de liaison (34), à un corps d'actionnement (35) qui est supporté de sorte qu'il peut glisser par l'intermédiaire dudit corps de support rotatif (2b) afin d'actionner ledit au moins un crochet (14).

4. Siège-auto pour enfant (1) selon la revendication 2, **caractérisé en ce que** lesdits logements de prise (23) sont en forme de U et sont supportés, mutuellement opposés et par paires, directement par ledit châssis fixe (2a).

5. Siège-auto pour enfant (1) selon une ou plusieurs des revendications précédentes, **caractérisé en ce que** ledit élément d'actionnement (51) agit en opposition à des moyens d'opposition élastiques.

6. Siège-auto pour enfant (1) selon les revendications 2 ou 4, **caractérisé en ce qu'**il comporte un appariement de forme entre lesdites dents de prise (22) et le logement de prise (23) respectif.

7. Siège-auto pour enfant (1) selon la revendication 6, **caractérisé en ce que** ledit appariement de forme entraîne que l'extrémité de chaque dent de prise (22) a un bord supérieur (22a) qui est dirigé vers le haut, et que le logement de prise (23) respectif a un bord de retenue latéral (23a) qui est dirigé vers le bas et fait au moins partiellement face, sur l'extrémité dirigée vers l'axe (100), au bord supérieur (22a) respectif .

8. Siège-auto pour enfant (1) selon une ou plusieurs des revendications précédentes, **caractérisé en ce que** ledit premier élément de siège comporte un siège pour bébé et ledit second élément de siège comporte un siège pour enfant.

9. Siège-auto pour enfant (1) selon une ou plusieurs des revendications précédentes, **caractérisé en ce que** ledit corps de support rotatif (2b) comporte au moins une zone d'interfaçage avec ledit élément de siège (10), ladite zone d'interfaçage étant formée de manière à ne pas interférer avec la surface externe dudit second élément de siège si ce dernier est couplé audit au moins un crochet (14) dans les deux orientations longitudinales et étant configurée de manière à ne pas interférer avec une partie de butée respective définie sur la surface externe dudit premier élément de siège si ce dernier est agencé de manière à faire face audit corps de support rotatif (2b) afin de le coupler audit au moins un crochet (14) dans une première orientation longitudinale, ledit élément interface étant configuré de manière à interférer avec la partie de butée respective définie sur la surface externe dudit premier élément de siège si ce dernier est agencé de manière à faire face audit corps de support rotatif (2b) afin de le coupler audit au moins un crochet (14) dans une seconde orientation longitudinale, qui est opposée à la première orientation longitudinale.

10. Siège-auto pour enfant (1) selon une ou plusieurs des revendications précédentes, **caractérisé en ce que** lesdits moyens de fermeture sont actionnés sur commande après le couplage dudit premier élément de siège audit au moins un crochet (14) dans la seule orientation autorisée parmi les orientations longitudinales, au moyen d'une partie d'actionnement qui est définie sur ledit premier élément de siège, et qui vient en prise avec un corps de butée qui est défini sur le corps de support rotatif (2b) et est mobile par rapport audit corps de support rotatif (2b), lesdits moyens de fermeture ayant une partie terminale adaptée pour empêcher un accès audit premier logement (53a) par ledit corps de prise (52).
